# EUROPEAN PATENT APPLICATION

(11) **EP 4 730 139 A1**
(43) Date of publication of application: **22.04.2026**
(21) Application number: 24221002.9
(22) Date of filing: 18.12.2024
(51) Int. Cl.: G06F 11/3604, G06F 11/3698, G06F 11/362, G06F 8/65

(54) **AUTOMATED OVER-THE-AIR TEST SYSTEM**

(30) Priority: 17.10.2024 TW 113139477
(71) Applicant: EGK Technology Co., Ltd., Kaohsiung City 814037 (TW)
(72) Inventor: Huang, Yu-Cheng, 814037 Kaohsiung City (TW); Lin, Chih-Hung, 814037 Kaohsiung City (TW); Mao, Hu-Feng, Shanghai (CN)
(74) Representative: Stevens Hewlett & Perkins

(57) **Abstract**

A direction control apparatus is provided. The direction control apparatus includes an input unit, and a magnetic sensing unit. The input unit includes an operation member, a magnetic member, an elastic member, and a base. The elastic member is an elastic structure. The magnetic sensing unit includes a magnetic sensor, and a magnetic signal processing device. The magnetic sensor is a device for sensing a distribution of a magnetic field, and the magnetic signal processing device is an electronic calculating device. The elastic member is provided for restricting the operation member at either a first status position or a second status position. When at the first status position, the operation member is positioned at balanced position where the elastic member achieves an elastic balance.

## Description

### CROSS-REFERENCE TO RELATED APPLICATION

This application claims the priority of Taiwanese patent application No. 113139477, filed on October 17, 2024, which is incorporated herewith by reference.

### BACKGROUND OF THE INVENTION

### 1. Field of the Invention

The present invention relates generally to a test system, and more particularly, to a test system applicable to the research and development stage of over-the-air (OTA) technology, which can also be a test system for designing specific verification processes for software upgrade specifications or regulatory requirements.

### 2. The Prior Arts

In the past, after a vehicle had been shipped off the factory, users had to go to the dealer or repair shop for repairs or system updates, which was very time-consuming and inconvenient. Moreover, for manufacturers, when encountering a major defect and need to initiate a vehicle recall process, not only the recall process requires a lot of time and cost, and the possible risks generated during the recall period will also bring hidden worries. Therefore, OTA technology will be used in conventional technologies to significantly shorten maintenance time and effectively reduce costs. Also, with the trend of automobile networking, the industry is moving from hardware-oriented to software and application service development. For the active and passive safety systems of automobiles, control functions, etc. can also be updated or upgraded through OTA technology.

On the other hand, OTA technology is a new software and firmware update method for car manufacturers. The vehicle does not need to go to the car factory for maintenance and update. Instead, the vehicle is repaired and the software and firmware are updated through remote update technology. Therefore, the use status of the vehicle during the update cannot be confirmed and whether the safety of the car owner will be endangered during the update period. Based on security considerations, vehicle OTA needs to follow certain specifications for development, such as EU UNECE-R-156.

Furthermore, with the rapid development of software-defined automobile intelligence, there are more and more upgradeable controllers in the car, such as in-vehicle infotainment (IVI), vehicle terminal box (TBOX), Advanced Driver Assistance System (ADAS), so that electric vehicles can have up to hundreds of electronic control units (ECU). Therefore, OTA technology, as an important way to upgrade vehicle software and firmware, is gradually becoming one of the key technologies in the automotive industry. However, the complexity of development and integration and the amount of testing have also increased due to the increase in the number of upgraded ECUs.

### SUMMARY OF THE INVENTION

### [Problem to be solved by the invention]

As can be seen from the aforementioned prior technologies, in the currently known OTA technology, it is impossible to confirm the usage status of the vehicle at the time of update, and as the number of software and firmware that needs to be updated increases, it is also impossible to guarantee whether the software and firmware content of each update is compatible with hardware equipment of various car models. Therefore, it is necessary to provide an automated testing system for the highly complex OTA and OTA development specifications of electronic cars to assist car manufacturers or automotive electronic parts suppliers in the development and testing, and reduce the manpower and time cost of the development effort of manufacturers through software automated testing.

### [Technical means to solve the problem]

An automated over-the-air test system includes: a test management platform, including a host and software module, a human-machine interactive interface, a database, and a script execution module; a test equipment, including a power module, a vehicle network interaction module, and at least one vehicle protocol connection port; and a client device under test, including a main control machine and at least one connection port; the client device under test is a vehicle simulation bench or a physical vehicle; wherein, the test management platform is electrically connected to the client device under test, the test equipment is electrically connected to the test management platform and the client device under test, and the vehicle network interaction module is connected to the connection port through the vehicle protocol connection port; wherein, at least one script is stored in the database, the script is associated with the automated over-the-air test process, and the test management platform performs testing on the client device under test according to the content of the script.

Preferably, the vehicle network interaction module is a controller area network (CAN) vehicle network interaction module, a local interconnect network (LIN) vehicle network interaction module, an Ethernet vehicle network interaction module, or a FlexRay vehicle network interaction module.

Preferably, the vehicle protocol connection port is an Android debug bridge (ADB).

Preferably, the test management platform and the test equipment are integrated into a test cabinet.

Furthermore, the present invention also provides an automated over-the-air test method, which includes the following steps: a test management platform executing at least one script through a script execution module, wherein the script is associated with the automated over-the-air test process; the test management platform performing testing on a client device under test according to the content of the script, wherein the client device under test is a vehicle simulation bench or a physical vehicle; a test equipment providing a vehicle network interaction module and at least one vehicle protocol connection port, wherein the test equipment is electrically connected to the test management platform and the client device under test, and the vehicle network interaction module is electrically connected to the client device under test through the vehicle protocol connection port; and the test management platform generating and storing a complete test report corresponding to the script.

Preferably, the test management platform inputs the vehicle condition information of the vehicle simulation bench or the physical vehicle through a human-machine interactive interface.

Preferably, when the management test platform is tested on the vehicle simulation bench or the physical vehicle, the management test platform further tests whether the vehicle simulation bench or the physical vehicle can perform normal basic vehicle operations.

Preferably, the test equipment reads and writes at least one electronic control unit in the vehicle simulation bench or the physical vehicle through a controller area network vehicle network interaction module with a unified diagnostic service to run automated over-the-air specification tests on the script.

### [Efficacy of Invention]

The advantages and effects of the present invention are as follows: 1. The test requirements of different test scenarios can be met by replacing different scripts. The flexible design can reduce the manpower and time required for test scenario conversion. 2. The support for client devices under test is multi-modular and conforms to various major automotive serial port interfaces. 3. When the amount of software and firmware that needs to be updated increases, scripts can be added directly to the automated over-the-air test system and script testing can be performed, thereby reducing the manpower and time costs of manufacturer development.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic structural view of an automated over-the-air test system according to an embodiment of the present invention.
FIG. 2 is a schematic structural view of an automated over-the-air test system according to another embodiment of the present invention.
FIG. 3 is a flow chart of an automated over-the-air test method according to an embodiment of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

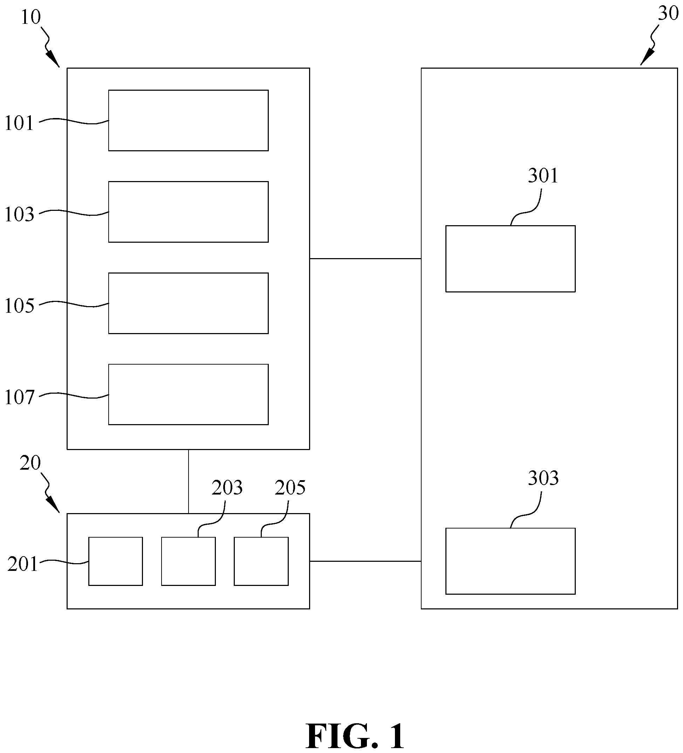

FIG. 1 is a schematic view illustrating the structure of an automated over-the-air test system according to an embodiment of the present invention. As shown in FIG. 1, an embodiment of the present invention provides an automated over-the-air test system, which includes a test management platform 10, a test equipment 20, and a client device under test 30. The test management platform 10 includes a host and software module 101, a human-machine interactive interface 103, a database 105, and a script execution module 107. The test equipment 20 includes a power module 201, a vehicle network interaction module 203, and at least one vehicle protocol connection port 205. The client device under test 30 includes a main control machine 301 and at least one connection port 303. The client device under test 30 is a vehicle simulation bench or a physical vehicle. The vehicle simulation bench refers to a vehicle function simulation integrated on a portable device, so that it is convenient for the user to adjust the data in the portable device to simulate the vehicle functions of various brands of vehicular models. Wherein, the test management platform 10 is electrically connected to the client device under test 30, the test equipment 20 is electrically connected to the test management platform 10 and the client device under test 30, and the vehicle network interaction module 203 is connected to the connection port 303 through the vehicle protocol port 205. The database 105 stores at least one script, which is associated with the automated over-the-air test process. More specifically, the script is an automated test process designed based on regulations or OTA upgrade specifications. The test process includes various update information that can be used for various software, firmware and electronic control units of the vehicle. The script execution module 107 of the test management platform 10 can execute the test on the main control machine 301 of the client device under test 30 based on the content of the script to simulate and confirm whether the automated over-the-air upgrade content can run normally on the vehicle.

Specifically, the user can run the script in the database 105 through the host and software module 101, the human-machine interactive interface 103, and the script execution module 107 of the test management platform 10; that is, the relevant test items and test processes in compliance with the OTA specification will be specifically converted into different scripts and imported into the database 105 of the test management platform 10. The user can select scripts and create test tasks through the test management platform 10 to perform the OTA testing of vehicle software and firmware testing and electronic control units (ECU). When the test scenario changes, users can also replace different scripts to meet the testing requirements of different test scenarios. This flexible design can reduce the manpower and time required for test scenario conversion.

In addition, in an embodiment of the present invention, the automated over-the-air test system's support for the client device under test 30 is multi-modular and conforms to various main serial port interfaces used in vehicles, such as power interface (PWR), Controller Area Network (CAN), Ethernet, Android Debug Bridge (ADB), Local Interconnect Network (LIN), Automotive Network Protocol (Flex Ray), etc. Also due to the advantage of modularity, serial port interfaces can be added or removed according to needs, avoiding the need to reinstall or set up equipment due to increased interface requirements. Therefore, in an embodiment of the present invention, the vehicle network interaction module 203 may be a Controller Area Network (CAN), a Local Interconnect Network (LIN) vehicle network interaction module, an Ethernet (ETH) automotive network interaction module or an automotive network protocol vehicle network interaction module. The number of vehicle protocol connection ports 205 and different port types can also be increased according to actual needs. For example, the vehicle protocol connection port 205 can be an Android debug bridge, and the controller area network vehicle network interaction module can be electrically connected to the connection port 303 through the Android Debug Bridge (ADB) to provide corresponding vehicle interactive functions when the client device under test 30 is tested. Furthermore, in other embodiments of the present invention, a plurality of different types of vehicle protocol connection ports 205 may correspond to a plurality of connection ports 303 to perform corresponding vehicle interaction functions for the different types of connection ports 303.

On the other hand, the user can modify the script content in the database 105 through the human-machine interactive interface 103 of the test management platform 10, so that the script can be quickly modified and directly implemented for testing when the test project is changed. Multiple scripts can be stored in the database 105 to improve testing convenience. Furthermore, the human-machine interactive interface 103 of the test management platform 10 can clearly view the status of all test items, and can also download test-related records and conduct debugging through the records. Also, the product classification function is also provided to allow users to distinguish test vehicles to perform test tasks more accurately.

In addition, when the test management platform 10 executes the test items, the human-machine interactive interface 103 will have a real-time monitoring flow chart and voice assistance to explain the current test progress. The user can clearly know the test process details and the host and software module 101 will automatically export a complete report detailing each record when the test is completed. In addition to text records, there will also be screenshots so that the user can directly refer to or use the report.

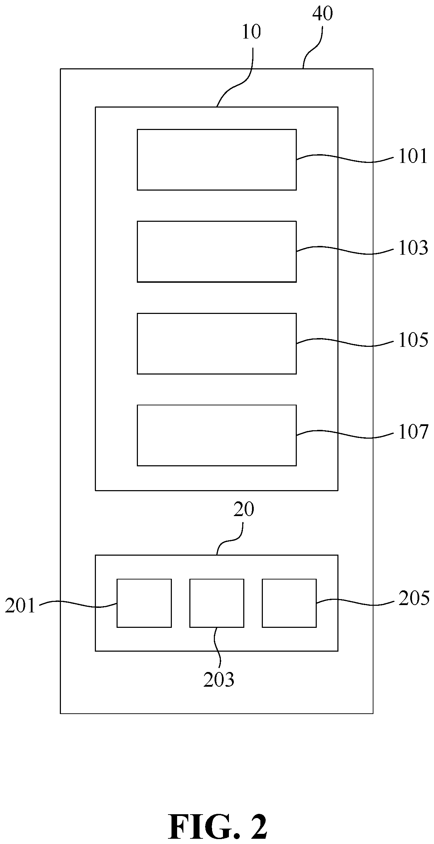

FIG. 2 is a schematic view illustrating the structure of an automated over-the-air test system according to another embodiment of the present invention. As shown in FIGS. 1 and 2, in another embodiment of the present invention, the test management platform 10 and the test equipment 20 can be integrated into a test cabinet 40 so that they become an integral device. Furthermore, the test cabinet 40 is movable, so that the user can move it to the side of the client device under test 30 to facilitate testing.

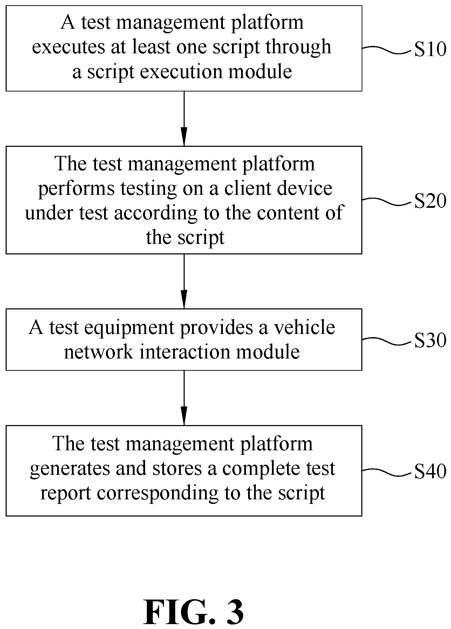

FIG. 3 is a flow chart illustrating an automated over-the-air test method according to an embodiment of the present invention. Referring to FIGS. 1 to 3, the present invention also provides an automated over-the-air test method, including steps S10 to S40. Step S10 is: a test management platform 10 executes at least one script through a script execution module 107, wherein the script is associated with the automated over-the-air test process. More specifically, the script is the automated testing process designed based on regulations or OTA upgrade specifications; Step S20 is: the test management platform 10 performs testing on a client device under test 30 according to the content of the script, wherein the client device under test 30 is a vehicle simulation bench or a physical vehicle; Step S30 is: a test equipment 20 provides a vehicle network interaction module 203 and at least one vehicle protocol connection port 205, wherein the test equipment 20 is electrically connected to the test management platform 10 and the client device under test 30, the vehicle network interaction module 203 is electrically connected to the client device under test 30 through the vehicle protocol connection port 205; and step S40 is: the test management platform 10 generates and stores a complete test report corresponding to the script. The following will illustrate the automated over-the-air test method with an example.

In step S10, the user can select the OTA test process script to be executed through the human-machine interactive interface 103 of the test management platform 10, and at the same time input the vehicle condition information of the vehicle simulation bench or the physical vehicle, such as brand of the vehicle, car model, vehicle configuration, and other information, and then the script execution module 107 is used to execute the selected OTA test process. Furthermore, after the setting is completed, a host and software module 101 of the test management platform 10 will make a judgment. If the vehicle condition information and vehicle setting conditions do not meet the conditions set out by the OTA test process, the upgrade will not be performed to ensure that the vehicle electronic units is only updated under the correct conditions and environment so as to also ensure the safety of car owners. Wherein, various OTA test process scripts can be stored in a database 105 in the test management platform 10.

In step S20, while the test is in progress, the user can click on the testing task that the user wants to view on the human-machine interactive interface 103. After clicking, the user can enter the details page of the testing task. On the page, the user can see the task name, applicable car models, task creator, task execution progress, task creation time, and all testing items under the task.

Furthermore, in step S20, when the management test platform 10 performs an upgrade test on the vehicle simulation bench or the physical vehicle, the management test platform 10 can further test whether the vehicle simulation bench or the physical vehicle can perform the normal basic vehicle operation and whether it complies with OTA upgrade test safety specifications, such as whether there are safety issues such as door jamming and locking, whether emergency actions such as adjusting gears, accelerating or braking and decelerating can operate normally, the management test platform 10 can use the signal simulation scenario to detect whether emergency operations can be performed during the upgrade. If not, the test fails. In addition, the test equipment 20 can use a controller area network vehicle network interaction module 203 to read and write at least one electronic control units of the vehicle simulation bench or the physical vehicle through the Unified Diagnostic Services (UDS) protocol to run the automated over-the-air regulation test on the script and to facilitate the subsequent upgrade test process.

In addition, in step S20, the test equipment 20 can use the controller area network vehicle network interaction module 203 to try to tamper with the upgrade package of the electronic control component through the UDS protocol to confirm whether the software OTA is protected. Once the software upgrade package is tampered, it will not be able to enter the OTA upgrade process.

Finally, when the entire OTA upgrade test process is completed, the test management platform 10 can generate and store a complete test report corresponding to the script, and provide the test institute with the complete test report to evaluate the OTA execution status of the device under test.

As can be seen from the above contents of the present invention, the present invention provides an automated over-the-air test system and method thereof. The advantages and effects of the present invention are as follows: 1. The test requirements of different test scenarios can be met by replacing different scripts. The flexible design can reduce the manpower and time required for test scenario conversion. 2. The support for client devices under test is multi-modular and conforms to various major automotive serial port interfaces. 3. When the amount of software and firmware that needs to be updated increases, scripts can be added directly to the automated over-the-air test system and script testing can be performed, thereby reducing the manpower and time costs of manufacturer development.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An automated over-the-air test system, comprising:
a test management platform, further comprising a host and software module, a human-machine interactive interface, a database, and a script execution module;
a test equipment, further comprising a power module, a vehicle network interaction module, and at least one vehicle protocol connection port; and
a client device under test, further comprising a main control machine and at least one connection port, and the client device under test being a vehicle simulation bench or a physical vehicle;
wherein, the test management platform is electrically connected to the client device under test, the test equipment is electrically connected to the test management platform and the client device under test, and the vehicle network interaction module is connected to the connection port through the vehicle protocol connection port;
wherein, at least one script is stored in the database, the script is associated with the automated over-the-air test process, and the test management platform performs testing on the client device under test according to the content of the script.

2. The automated over-the-air test system according to claim 1, wherein the vehicle network interaction module is a controller area network (CAN) vehicle network interaction module, a local interconnect network (LIN) vehicle network interaction module, an Ethernet vehicle network interaction module, or a FlexRay vehicle network interaction module.

3. The automated over-the-air test system according to claim 2, wherein the vehicle protocol connection port is an Android debug bridge (ADB).

4. The automated over-the-air test system according to claim 1, wherein the test management platform and the test equipment are integrated into a test cabinet.

5. An automated over-the-air test method, comprising the following steps
a test management platform executing at least one script through a script execution module, wherein the script is associated with the automated over-the-air test process;
the test management platform performing testing on a client device under test according to the content of the script, wherein the client device under test is a vehicle simulation bench or a physical vehicle;
a test equipment providing a vehicle network interaction module and at least one vehicle protocol connection port, wherein the test equipment is electrically connected to the test management platform and the client device under test, and the vehicle network interaction module is electrically connected to the client device under test through the vehicle protocol connection port; and
the test management platform generating and storing a complete test report corresponding to the script.

6. The automated over-the-air test method according to claim 5, wherein the test management platform inputs the vehicle condition information of the vehicle simulation bench or the physical vehicle through a human-machine interactive interface.

7. The automated over-the-air test method according to claim 6, wherein when the management test platform is tested on the vehicle simulation bench or the physical vehicle, the management test platform further tests whether the vehicle simulation bench or the physical vehicle can perform normal basic vehicle operations.

8. The automated over-the-air test method according to claim 5, wherein the test equipment reads and writes at least one electronic control unit in the vehicle simulation bench or the physical vehicle through a controller area network vehicle network interaction module with a unified diagnostic service to run automated over-the-air specification tests on the script.
